# EUROPÄISCHE PATENTSCHRIFT

(11) **EP 3 172 610 B1**
(45) Veröffentlichungstag und Bekanntmachung des Hinweises auf die Patenterteilung: **24.02.2021**
(21) Anmeldenummer: 15739615.1
(22) Anmeldetag: 22.07.2015
(51) Int. Cl.: G02B 21/16, G01N 21/64, G02B 21/06, G02B 27/56

(54) **VERFAHREN UND VORRICHTUNG ZUM MIKROSKOPISCHEN UNTERSUCHEN EINER PROBE**
METHOD AND DEVICE FOR MICROSCOPIC EXAMINATION OF A SAMPLE
PROCÉDÉ ET DISPOSITIF D'ANALYSE MICROSCOPIQUE D'UN ÉCHANTILLON

(30) Priorität: 22.07.2014 LU 92505
(43) Veröffentlichungstag der Anmeldung: 31.05.2017
(73) Patentinhaber: Leica Microsystems CMS GmbH, 35578 Wetzlar (DE)
(72) Erfinder: KNEBEL, Werner, 76709 Kronau (DE)
(74) Vertreter: m patent group
(86) Internationale Anmeldenummer: PCT/EP2015/066799
(87) Internationale Veröffentlichungsnummer: WO 2016/012518

(56) Entgegenhaltungen:
- WO-A1-2005/031429
- WO-A1-2013/060644
- WO-A1-2014/147207
- WO-A1-2014/202704
- DE-A1-102005 040 833
- DE-A1-102006 039 976
- US-A- 2 844 992
- US-A- 4 626 079

## Beschreibung

Die Erfindung betrifft ein Verfahren zum mikroskopischen Untersuchen einer Probe.

Die Erfindung betrifft außerdem eine Vorrichtung zur Ausführung eines solchen Verfahrens.

Bei mikroskopischen Fluoreszenz-Untersuchungen von Proben werden diese zumeist direkt mit einem Beleuchtungslichtbündel beleuchtet, um die Probe im beleuchteten Bereich optisch anzuregen und anschließend das von der Probe ausgehende Fluoreszenzlicht zu detektieren. In der Rastermikroskopie wird der Fokus eines Beleuchtungslichtbündels zumeist mit Hilfe einer steuerbaren Strahlablenkeinrichtung, die beispielsweise einen oder mehrere Kippspiegel beinhalten kann, mäanderförmig über oder durch die Probe geführt und die Probe so Probenpunkt für Probenpunkt abgerastert.

Alternativ zu einer direkten Probenbeleuchtung ist es auch möglich, die Probe evaneszent beleuchten. Hierbei wird das Anregungslicht an einer Grenzfläche zur Probe totalreflektiert, wobei die Anregung der Probe durch das mit der Eindringtiefe abklingende evaneszente elektromagnetische Feld erfolgt. Für diese Art der Probenuntersuchung hat sich der Begriff TIRFM (total internal reflection fluorescence microscopy) eingebürgert.

Aus DE 103 44 410 A1 ist ein Rastermikroskop mit evaneszenter Probenbeleuchtung bekannt. Das Rastermikroskop beinhaltet eine Lichtquelle, deren Licht in ein Deckglas eingekoppelt wird, so dass es sich in diesem durch totalinterne Reflexion flächig ausbreiten und eine auf dem Deckglas angeordnete Probe großflächig evaneszent beleuchten kann. Außerdem weist das Rastermikroskop einen Punktdetektor auf, der von einem Rasterpunkt der Probe ausgehendes Detektionslicht empfängt, und eine im Strahlengang des Detektionslichtes angeordnete Strahlablenkeinrichtung zum Verschieben der Position des Rasterpunktes in der Probe. Allerdings hat diese Vorrichtung den Nachteil, dass die Einkopplung des Beleuchtungslichts in das Deckglas nicht sehr effizient ist und daher nur eine verringerte Lichtmenge zur evaneszenten Probenbeleuchtung zur Verfügung steht.

Aus der DE 10 2006 039 976 A1 ist eine Beleuchtungsoptik für die TIRF-Mikroskopie, also für eine evaneszente Beleuchtung, bekannt. Mit der dort beschriebenen Anordnung ist es möglich, eine Probe mit einem optisch transparenten Medium mit höherem Brechungsindex in Kontakt zu bringen, ein Beleuchtungslichtbündel zu erzeugen, dieses durch ein Beleuchtungsobjektiv zu lenken, um es zu fokussieren und dann mittels Umlenkmittel umzulenken auf eine Grenzfläche zwischen Probe und transparentem Medium für eine Totalreflexion. Das ausgesendete Fluoreszenzlicht wird dann detektiert.

Aus der WO 2013/060644 A1 ist ein sog. SPIM-Verfahren, bei dem eine Probe mit Licht nur in einzelnen Ebenen beleuchtet wird. Ähnliche Verfahren sind auch aus den nachveröffentlichten Dokumenten WO 2014/147207 A1 und WO 2014/202704 A1 bekannt.

Darüber hinaus haben die aus dem Stand der Technik bekannten Verfahren und Vorrichtungen hinsichtlich der evaneszenten Probenbeleuchtung oftmals den Nachteil, dass der genaue Ort der Probenbeleuchtung nicht flexibel und hinreichend präzise eingestellt werden kann.

Darüber hinaus haben die aus dem Stand der Technik bekannten Verfahren und Vorrichtungen den Nachteil, dass die Proben vor einer mikroskopischen Untersuchung bei evaneszenter Beleuchtung aufwendig in speziellen Probenkammern oder zwischen Deckgläsern angeordnet und präpariert werden müssen, bevor die Probenkammer oder die Anordnungen von Deckgläsern, zwischen denen die Probe mechanisch eingeklemmt ist, auf den Objekttisch eines Mikroskops gelegt werden kann. Oftmals werden gerade die Randbereiche der Probe, die an der Grenzfläche anliegen, an der die Totalreflektion stattfinden soll, durch die andauernde Druckbelastung geschädigt, so dass das die nachfolgende mikroskopische Untersuchung zumindest negativ beeinflusst oder sogar ganz unmöglich gemacht wird.

Es ist die Aufgabe der vorliegenden Erfindung, ein Verfahren zum mikroskopischen Untersuchen einer Probe anzugeben, das flexibel für unterschiedliche Proben und Anordnungen von Proben einsetzbar und insbesondere probenschonend ausführbar ist.

Die Aufgabe wird durch ein Verfahren gelöst, das die folgenden Schritte beinhaltet:
a. In-Kontakt-bringen der Probe mit einem optisch transparenten Medium, das einen höheren Brechungsindex aufweist als die Probe,
b. Erzeugen eines Beleuchtungslichtbündels,
c. Lenken des Beleuchtungslichtbündels durch ein Beleuchtungsobjektiv, das das Beleuchtungslichtbündel fokussiert,
d. Umlenken des Beleuchtungslichtbündels, das das Beleuchtungsobjektiv durchlaufen hat, in Richtung auf die zu untersuchende Probe mit einem an einem Detektionsobjektiv angeordneten Umlenkmittel, derart dass das Beleuchtungslichtbündel auf eine Grenzfläche zwischen dem optisch transparenten Medium und der Probe trifft und dort zur evaneszenten Beleuchtung der Probe totalreflektiert wird,
e. Detektieren des von der Probe ausgehenden und durch das Detektionsobjektiv verlaufenden Fluoreszenzlichtes, wobei das Detektionsobjektiv und das Beleuchtungsobjektiv einander entgegengesetzt und einander gegenüberliegend ausgerichtet sind. Beispielsweise mit einem Detektor, der ein zur Lichtleistung des Fluoreszenzlichts proportionales elektrisches Signal erzeugt.

Es ist eine weitere Aufgabe der vorliegenden Erfindung, eine Vorrichtung anzugeben, die es ermöglicht, eine mikroskopische Probe nach dem oben genannten Verfahren bei evaneszenter Beleuchtung abzubilden.

Diese Aufgabe wird durch eine Vorrichtung gelöst, die ein Beleuchtungsobjektiv und ein Detektionsobjektiv, an dem ein Umlenkmittel zum Umlenken eines Beleuchtungslichtbündels auf eine Grenzfläche zwischen einem optisch transparenten Medium und einer Probe angeordnet ist, aufweist, wobei das Detektionsobjektiv und das Beleuchtungsobjektiv einander entgegengesetzt und einander gegenüberliegend ausgerichtet sind.

Die Erfindung hat den Vorteil, dass eine evaneszente Probenbeleuchtung mit besonders großer Effizienz ermöglicht ist. Dies ist insbesondere darauf zurückzuführen, dass das Beleuchtungslichtbündel aufgrund der Umlenkung mit dem Umlenkmittel, die nach dem Durchlaufen des Beleuchtungsobjektivs erfolgt, einfach und zuverlässig unter dem erforderlichen Einfallswinkel zum Bewirken einer totalinternen Reflektion auf die Grenzfläche zwischen dem optisch transparenten Medium und der Probe gelenkt werden kann.

Darüber hinaus hat die Erfindung den weiteren, besonderen Vorteil, dass der Auftreffort auf die Grenzfläche zwischen dem optisch transparenten Medium und der Probe einfach und ohne die Gefahr geändert werden kann, dass der Grenzwinkel der Totalreflektion ungewollt durchschritten wird, was weiter unten noch im Detail erläutert ist.

Das erfindungsgemäße Verfahren kann darüber hinaus vorteilhaft auch in der Weise ausgeführt werden kann, dass eine Probe vollkommen ohne Druckbelastung der zur untersuchenden Randfläche in eine Untersuchungsposition verbracht werden kann und erst unmittelbar vor dem Erzeugen einer mikroskopischen Abbildung mit dem optisch transparenten Medium in Kontakt gebracht wird, so dass die mikroskopische Untersuchung einer weitgehend unbelasteten Probe ermöglicht ist. Auch dies ist weiter unten insbesondere im Zusammenhang mit einigen Ausführungsbeispielen genauer erläutert.

Um das Beleuchtungslichtbündel mit dem für eine totalinterne Reflektion erforderlichen Einfallswinkel auf die Grenzfläche zwischen der Probe und dem optisch transparenten Medium zuverlässig ausrichten zu können, wird die Grenzfläche vorzugsweise in einem von Null Grad verschiedenen Winkel zur optischen Achse des Beleuchtungsobjektivs und/oder des Detektionsobjektivs ausgerichtet. Besonders flexibel und vielseitig einsetzbar ist eine Ausführung, bei der die Grenzfläche zwischen der Probe und dem optisch transparenten Medium senkrecht zur optischen Achse des Beleuchtungsobjektivs und/oder des Detektionsobjektivs ausgerichtet ist. Insbesondere eine solche Ausrichtung erlaubt es, die Probe und insbesondere ein und denselben Probenbereich der Probe aus unterschiedlichen Richtungen und insbesondere jeweils mit demselben Einfallswinkel zu beleuchten. Dies erfolgt beispielsweise, um die Fluoreszenzeigenschaften der Probe in Abhängigkeit von der Polarisation des Beleuchtungslichts, insbesondere in Abhängigkeit von der Ausrichtung der Ebene der Linearpolarisation des Beleuchtungslichts, zu untersuchen.

Insbesondere hierfür kann vorteilhaft vorgesehen sein, dass das Beleuchtungslichtbündel nach dem Umlenken in einer Ebene verläuft, die einen von Null Grad verschieden Winkel zur optischen Achse des Beleuchtungsobjektivs aufweist. Beispielsweise kann vorgesehen sein, dass das Beleuchtungslichtbündel derart abgelenkt wird, dass es unter einem Einfallswinkel im Bereich von 55 bis 70 Grad, insbesondere im Bereich von 60 bis 64 Grad, auf die Grenzfläche zwischen der Probe und dem optisch transparenten Medium trifft. Innerhalb dieser Bereiche ist eine evaneszente Probenbeleuchtung der meisten biologischen Proben bei ausreichender Eindringtiefe möglich.

Bei einer ganz besonders vorteilhaften Ausführung des erfindungsgemäßen Verfahrens werden der Auftreffort und/oder der Einfallswinkel und/oder die Einfallsrichtung des Beleuchtungslichtbündels auf die Grenzfläche zwischen der Probe und dem optisch transparenten Medium während der mikroskopischen Untersuchung verändert.

Ein Ändern des Auftreffortes ermöglicht es beispielsweise, nacheinander unterschiedliche Probenbereiche zu beleuchten und zu untersuchen, indem das von diesen Probenbereichen ausgehende Fluoreszenzlicht einem Flächendetektor zur Erfassung eines zweidimensionalen Bildes, wie beispielsweise einem CCD-Detektor, zugeführt und eine Abbildung des jeweiligen Probenbereiches erzeugt wird. Insbesondere ist es beispielsweise möglich, die mit dem optisch transparenten Medium in Kontakt stehende Randfläche der Probe systematisch entlang einer Scanbahn abzuscannen und jedem dabei überstrichenen Probenbereich eine Flächenabbildung zuzuordnen. Aus den gewonnen Bildinformationen für die einzelnen Probenbereiche kann dann ein Gesamtabbild der Probe rekonstruiert werden. Beispielsweise kann der Auftreffort des Beleuchtungslichtbündels auf die Grenzfläche zwischen der Probe und dem optisch transparenten Medium kontinuierlich entlang einer, insbesondere mäanderförmigen, Scanbahn verändert werden. Auf diese Weise kann der Tatsache Rechnung getragen werden, dass die beleuchtete Fläche in aller Regel kleiner ist, als das Beobachtungsfeld des Detektionsobjektivs. Durch Aneinanderreihen mehrerer Abbildungen unterschiedlicher Probenbereiche kann das gesamte Beobachtungsfeld des Detektionsobjektivs ausgenutzt werden.

Allerdings bleibt eine solche Vorgehensweise wohl eher besonderen Anwendungen vorbehalten, während zumeist lediglich ein ausreichend großer Beleuchtungsfokus erzeugt wird, um simultan den gesamten interessierenden Probenbereich evaneszent beleuchten zu können und um simultan mit einem Flächendetektor zur Erfassung eines zweidimensionalen Bildes, wie beispielsweise einem CCD-Detektor, ein Abbild des Probenbereichs zu erzeugen.

Um einen möglichst großen Beleuchtungsfleck zu erhalten, sollte der Fokus des Beleuchtungslichtbündels in Beleuchtungslichtausbreitungsrichtung möglichst lang sein und einen möglichst großen Fokusdurchmesser aufweisen. Ein in Beleuchtungslichtausbreitungsrichtung langer Fokus ist wichtig, weil der Beleuchtungsfleck auf der Grenzfläche zwischen dem optisch transparenten Medium und der Probe auf Grund des großen Einfallswinkels, unter dem das Beleuchtungslichtbündel auf die Grenzfläche trifft, langgezogen ist. Bei einem im Querschnitt senkrecht zur Ausbreitungsrichtung kreisrunden Beleuchtungslichtbündel ist die Auftrefffläche auf der Grenzfläche zwischen dem optisch transparenten Medium und der Probe naturgemäß elliptisch. Insoweit sollte die Fokuslänge vorzugsweise größer als das Doppelte der großen Halbachse der Ellipse der Auftrefffläche sein. Ein großer Fokusdurchmesser wirkt sich insbesondere in Richtung der kleinen Halbachsen aus.

Um einen möglichst großen Fokusdurchmesser und einen in Ausbreitungsrichtung möglichst langen Fokus erzeugen zu können, weist das Beleuchtungsobjektiv vorzugsweise eine geringe numerische Apertur von beispielsweise 0,05 auf. Mit einem solchen Objektiv könnte ganz ungefähr und abhängig anderen Parametern, wie dem gewählten Einfallswinkel zur Grenzfläche zwischen dem optisch transparenten Medium und der Probe, eine Auftrefffläche von ca. 100 m mal 10 m beleuchtet werden.

Um insbesondere in Richtung der kleinen Halbachsen eine Vergrößerung der Auftrefffläche zu erreichen, kann statt eines kreisrunden Beleuchtungslichtbündels ein entsprechend orientierter Lichtstreifen, also ein im Querschnitt senkrecht zur Ausbreitungsrichtung längliches Beleuchtungslichtbündel, oder ein Quasi-Lichtstreifen in das Beleuchtungsobjektiv eingekoppelt werden, was weiter unten im Detail erläutert ist.

Bei einer besonderen Ausführung wird, alternativ oder zusätzlich zu einer Veränderung des Auftreffortes, der Einfallswinkel des Beleuchtungslichtbündels auf die Grenzfläche zwischen der Probe und dem optisch transparenten Medium geändert. Auf diese Weise ist es beispielsweise möglich, die Eindringtiefe des evaneszenten Feldes in die Probe und/oder die Größe des mit dem Beleuchtungslichtbündel beleuchteten Flecks zu variieren.

Alternativ oder zusätzlich zu einer Veränderung des Auftreffortes und/oder zu einer Veränderung des Einfallswinkels kann auch die Einfallsrichtung des Beleuchtungslichtbündels auf die Grenzfläche zwischen der Probe und dem optisch transparenten Medium verändert werden. Dies kann insbesondere erfolgen, um mit der Einfallsrichtung gleichzeitig auch die Linearpolarisationsrichtung des auf die Grenzfläche treffenden Lichtes zu drehen, wenn beispielsweise von der Linearpolarisationsrichtung abhängige Eigenschaften der Probe untersucht werden sollen.

Um den Auftreffort und/oder den Einfallswinkel und/oder die Einfallsrichtung des Beleuchtungslichtbündels auf die Grenzfläche zwischen der Probe und dem optisch transparenten Medium verändern zu können, kann insbesondere eine hinsichtlich des Ablenkwinkels einstellbare Strahlablenkeinrichtung verwendet werden. Diese kann beispielsweise einen kardanisch aufgehängten Kippspiegel oder zwei um unterschiedliche Drehachsen drehbare Kippspiegel beinhalten. Insbesondere kann vorgesehen sein, dass das Beleuchtungslichtbündel mit der Strahlablenkeinrichtung relativ zu dem Beleuchtungsobjektiv und/oder relativ zu dem Umlenkmittel bewegt wird.

Alternativ oder zusätzlich zur Verwendung einer einstellbaren Strahlablenkeinrichtung ist es auch möglich, dass der Auftreffort und/oder der Einfallswinkel und/oder die Einfallsrichtung des Beleuchtungslichtbündels auf die Grenzfläche zwischen der Probe und dem optisch transparenten Medium durch Bewegen der Probe relativ zu dem Beleuchtungsobjektiv und/oder relativ zu dem Beleuchtungslichtbündel verändert wird. Hierzu kann insbesondere ein vorzugsweise in drei Raumrichtungen verschiebbarer Probentisch verwendet werden.

Neben den genannten Möglichkeiten zum Verändern des Auftreffortes, des Einfallswinkels und/oder der Einfallsrichtung ist es auch möglich, diese Parameter durch Bewegen des Umlenkmittels relativ zur Probe zu verändern. Dies kann alternativ oder auch zusätzlich zur Verwendung einer Strahlablenkeinrichtung und/oder zu einem Bewegen der Probe erfolgen. Bei einer besonderen Ausführung ist das Umlenkmittel an dem Detektionsobjektiv unbeweglich befestigt. Insbesondere, um jedoch den Auftreffort und/oder den Einfallswinkel und/oder die Einfallsrichtung ändern zu können, kann das Umlenkmittel vorteilhaft beweglich an dem Detektionsobjektiv angeordnet, insbesondere befestigt, sein.

Bei einer besonderen Ausführung ist das Umlenkmittel im Frontbereich und/oder in der Nähe der Frontlinse angeordnet.

Bei einer besonderen Ausführung ist das Umlenkmittel als Spiegel mit mehreren Facetten ausgebildet. Insbesondere eine solche Ausführung ermöglicht es, den Auftreffort und/oder den Einfallswinkel und/oder die Einfallsrichtung des Beleuchtungslichtbündels auf die Grenzfläche zwischen der Probe und dem optisch transparenten Medium dadurch zu verändern, dass - beispielsweise mittels einer einstellbaren Strahlablenkeinrichtung oder durch Bewegen des Umlenkmittels - nacheinander unterschiedliche Facetten beleuchtet werden. Hierbei kann insbesondere vorgesehen sein, dass die Facetten räumlich unterschiedlich ausgerichtet sind, um jeweils eine Reflexion in eine andere Raumrichtung bewirken zu können. Alternativ ist es beispielsweise auch möglich, dass das Umlenkmittel eine kegelstumpfförmige Spiegelfläche aufweist. Eine solche Ausführung erlaubt es, das Beleuchtungslichtbündel kontinuierlich und eine Kegeloberfläche beschreibend um eine durch den Auftreffort verlaufende Achse rotieren zu können.

Wie erläutert, bietet das erfindungsgemäße Verfahren eine ganze Reihe von Möglichkeiten zum Einstellen des Auftreffortes und/oder des Einfallswinkels und/oder der Einfallsrichtung, was den ganz besonderen Vorteil hat, dass der Benutzer das Verfahren individuell an die jeweils vorliegenden probenspezifischen oder untersuchungsspezifischen Anforderungen anpassen kann.

Für den Fall, dass der Auftreffort geändert wird, insbesondere auch wenn ein Abrastern der Grenzfläche zwischen dem optisch transparenten Medium und der Probe erfolgt, kann zur Erzeugung einer aus mehreren Abbildungen zusammengesetzten Gesamtabbildung der Probe eine Zuordnung des jeweiligen Auftreffortes zu jeweils einem Probenbereich erfolgen.

Insbesondere kann vorgesehen sein, dass für jeden Auftreffort unter Berücksichtigung des Einfallswinkels und/oder des Brechungsindexes der Probe und/oder des Brechungsindexes des optisch transparenten Mediums und/oder der Wellenlänge des Beleuchtungslichtbündels und/oder dem Durchmesser des Auftreffortes ein zugehöriger Probenbereich ermittelt wird. Bei einer solchen Ermittlung werden vorzugsweise Fehler, insbesondere systembedingte Fehler, korrigiert oder kompensiert. Insbesondere kann eine Kompensation oder Korrektur von räumlichen Abweichungen des tatsächlichen Verlaufs des Beleuchtungslichtbündels relativ zu einem nach den Grundsätzen der geometrischen Optik zu erwartenden Strahlenverlauf, wie beispielsweise durch den Goos-Hähnchen-Effekt, erfolgen.

Vorzugsweise erfolgt auch eine Kompensation oder eine Korrektur der Fehler, die durch eine Abweichung der Dicke des optisch transparenten Mediums, insbesondere eines Deckglases, von einer Solldicke hervorgerufen würden. Beispielsweise ist es nicht selten, dass die tatsächliche Dicke eines Deckglases erheblich von der Standarddicke von zumeist 170 m abweicht. Derartige Kompensationen und die Berücksichtigung derartiger Korrekturfaktoren haben den Vorteil, dass eine besonders gute Auflösung der Abbildung der zu untersuchenden Probe erreicht werden kann.

Bei einer vorteilhaften Ausführung wird jedem Auftreffort und/oder jedem zugeordneten Probenbereich jeweils wenigstens eine spezifische, insbesondere zweidimensionale, Abbildung zugeordnet, die durch Detektion des während der Beleuchtung des jeweiligen Auftreffortes von der Probe ausgehenden Detektionslichts gewonnen wurde.

Unter dem Begriff Abbildung wird insbesondere eine Reproduktion der Probe oder eines Teils der Probe in Form von, beispielsweise mittels eines PC, darstellbaren Daten und/oder in Form eines mit dem Auge sichtbaren Bildes verstanden.

Der Detektor kann insbesondere derart ausgebildet sein, dass er für jeden Pixel ein zur Lichtleistung des empfangenen Detektionslichts proportionales elektrisches Signal erzeugt. Insbesondere kann auch vorgesehen sein, dass der Detektor - simultan oder sequentiell - spezifisch Fluoreszenzlicht unterschiedlicher Wellenlängen empfängt und jeweils entsprechende elektrische Detektionssignale erzeugt. Beispielsweise kann es sich bei dem Detektor um einen CMOS-Sensor handeln, der in der Lage ist, Fluoreszenzlicht wellenlängenabhängig in unterschiedlichen Schichten (Kanälen) unabhängig voneinander zu detektieren. Alternativ kann der Detektor mehrere CCD-Detektoren beinhalten, denen mit dichroitischen Strahlteilern jeweils Detektionslicht unterschiedlicher Wellenlängenbereiche zugeleitet wird. Insbesondere für eine Detektion von Fluoreszenzlicht unterschiedlicher Wellenlängen kann das Anregungslichtbündel mehrere Anregungslichtwellenlängen, beispielsweise eines Mehrfarblasers oder mehrerer Einzellaser oder einer Weißlichtquelle, beinhalten.

Wie bereits erwähnt, kann das Beleuchtungslichtbündel im Querschnitt kreisrund sein. Bei einer solchen Ausführung ist die Auftrefffläche auf der Grenzfläche zwischen dem optisch transparenten Medium und der Probe naturgemäß langgezogen und elliptisch. Es ist jedoch, wie ebenfalls bereits erwähnt, auch möglich, dass das Beleuchtungslichtbündel die Form eines Lichtstreifens aufweist. Eine solche Strahlform kann beispielsweise mit einer im Strahlengang des Beleuchtungslichtbündels angeordneten Zylinderoptik erreicht werden. Alternativ ist es auch möglich, einen Quasi-Lichtstreifen dadurch zu erzeugen, dass ein im Querschnitt im wesentlichen rundes Beleuchtungslichtbündel beispielsweise mit Hilfe einer Strahlablenkeinrichtung in einer Raumrichtung derart schnell hin und her gewedelt wird, dass es von einem mittels einer Zylinderoptik erzeugten Lichtstreifen nicht mehr zu unterscheiden ist.

Die Verwendung eines Beleuchtungslichtbündels in Form eines Lichtstreifens ermöglicht es, die Grenzfläche zwischen dem optisch transparenten Medium und der Probe großflächig zu beleuchten.

Eine besonders flexibel einsetzbare und präzise arbeitende Anordnung zur Ausführung des erfindungsgemäßen Verfahrens ergibt sich, wenn die optische Achse des Beleuchtungsobjektivs und die optische Achse des Detektionsobjektivs zueinander parallel oder koaxial ausgerichtet sind, wobei das Detektionsobjektiv und das Beleuchtungsobjektiv mit ihren jeweiligen Frontlinsen einander zugewandt sind. Bei einer solchen Ausführung kann die zu untersuchende Probe in dem Zwischenraum zwischen dem Beleuchtungsobjektiv und dem Detektionsobjektiv angeordnet werden, wobei in vorteilhafter Weise viel Raum zum Führen und Lenken des Beleuchtungslichtbündels, insbesondere im Hinblick auf eine Beleuchtung der Grenzfläche aus unterschiedlichen Richtungen oder mit unterschiedlichen Einfallswinkeln, verbleibt. Dies hat den besonderen Vorteil, dass eine Vielzahl von Möglichkeiten zur Anpassung der Untersuchungsbedingungen an die jeweiligen Erfordernisse gegeben ist.

Bei einer ganz besonders vorteilhaften Ausführung des erfindungsgemäßen Verfahrens wird dieselbe Probe mit derselben Vorrichtung und einer anderen Untersuchungsmethode untersucht. Eine derartige Vorgehensweise hat den ganz besonderen Vorteil, dass mit unterschiedlichen Untersuchungsmethoden unabhängig voneinander Informationen über die Probe gewonnen werden können, beispielweise um diese Informationen gegeneinander abzugleichen oder um möglichst viele Informationen über die Probe zu Sammeln. Hierbei verbleibt die Probe vorzugsweise in dem Raum zwischen dem Beleuchtungsobjektiv und dem Detektionsobjektiv.

Zusätzlich zu einer Untersuchung, bei der eine wie oben beschriebene evaneszente Beleuchtung der Probe erfolgt, kann vorteilhaft eine SPIM-Untersuchung (SPIM: Single Plane Illumination Microscopy) durchgeführt werden, bei der das Beleuchtungslichtbündel, insbesondere in Form eines Lichtstreifens oder eines Quasi-Lichtstreifens, direkt und ohne Totalreflektion auf und durch die Probe gelenkt wird. Mittels eines solchen Lichtstreifens oder Quasi-Lichtstreifen wird eine Schicht der Probe vollständig durchleuchtet, wobei eine Detektion des senkrecht von dieser Schicht ausgehenden und durch das Detektionsobjektiv kollimierten Detektionslichts erfolgt. Um hierbei eine Ortsinformation bezüglich der einzelnen Probenorte der Schicht erhalten zu können, wird vorzugsweise ein Flächendetektor, beispielsweise ein CCD-Detektor, verwendet. Durch sukzessives Verschieben des Lichtstreifens relativ zur Probe kann Schicht für Schicht durchleuchtet und ein Schichtstapel von ortsaufgelösten Detektionssignalen und damit eine dreidimensionale Rekonstruktion der Probe erzeugt werden.

Insbesondere für eine SPIM-Untersuchung kann vorteilhaft vorgesehen sein, dass das Beleuchtungslichtbündel mittels eines weiteren, an dem Beleuchtungsobjektiv angeordneten Umlenkmittels nach dem Durchlaufen des Beleuchtungsobjektivs unmittelbar zur Probe umgelenkt wird. Dies vorzugsweise derart, dass sich der Lichtstreifen unter einem von Null Grad verschiedenen Winkel zur optischen Achse des Detektionsobjektivs, insbesondere unter einem Winkel von 90 Grad zur optischen Achse des Detektionsobjektivs, ausbreitet. Vorzugsweise ist die Ebene, in der sich der umgelenkte Lichtstreifen beziehungsweise Quasi-Lichtstreifen ausbreitet, senkrecht zur optischen Achse des Detektionsobjektivs ausgerichtet. Eine solche Ausrichtung ermöglicht eine besonders präzise Bildrekonstruktion, bei der aufwändige geometrische Korrekturrechnungen weitgehend vermieden sind.

Bei einer besonderen Ausführung sind an dem Detektionsobjektiv wenigstens zwei Umlenkmittel angeordnet von denen eines für die Umlenkung des Beleuchtungslichtbündels zur evaneszenten Probenbeleuchtung dient, während das weitere Umlenkmittel zum Umlenken des, insbesondere zu einem Lichtstreifen oder Quasi-Lichtstreifen geformten, Beleuchtungslichtbündels für eine SPIM-Untersuchung dient.

Um zwischen einer evaneszenten Probenbeleuchtung und einer direkten Probenbeleuchtung umschalten zu können, können die Umlenkmittel derart beweglich an dem Detektionsobjektiv angeordnet sein, dass wahlweise das eine oder das weitere Umlenkmittel in den Strahlengang des Beleuchtungslichtbündels eingeführt werden kann. Alternativ oder zusätzlich ist es auch möglich, das Beleuchtungslichtbündel mit Hilfe einer hinsichtlich des Ablenkwinkels einstellbaren Strahlablenkeinrichtung auf das jeweils gewünschte Umlenkmittel zu lenken.

Zumeist ist es von Vorteil, wenn das Beleuchtungslichtbündel derart in das Beleuchtungsobjektiv eingekoppelt wird, dass es außermittig durch das Beleuchtungsobjektiv verläuft, weil ein solcher Strahlverlauf es ermöglicht, die Probe auf oder wenigstens nahe der optischen Achse des Beleuchtungsobjektivs und/oder des Detektionsobjektivs zu positionieren, wobei die Möglichkeit gewahrt ist, die Probe aus ganz unterschiedlichen Richtungen beleuchten zu können.

Bei einer ganz besonders vorteilhaften Ausführungsform einer zur Ausführung des erfindungsgemäßen Verfahrens geeigneten Vorrichtung ist das transparente optische Medium selbst das Umlenkmittel oder zumindest Teil des Umlenkmittels. Insbesondere eine solche Ausführung ermöglicht es, die Probe zunächst mechanisch vollkommen unbelastet, beispielsweise in einer wassergefüllten Petrischale zwischen dem Beleuchtungsobjektiv und dem Detektionsobjektiv zu positionieren, wobei vorzugsweise das Beleuchtungsobjektiv in einer inversen Mikroskopanordnung räumlich unterhalb der Probe angeordnet ist, während sich das Detektionsobjektiv oberhalb der Probe befindet. Erst unmittelbar vor der eigentlichen Untersuchung kann in einer solchen Anordnung das transparente optische Medium zusammen mit dem Detektionsobjektiv so weit in Richtung auf die Probe bewegt werden, bis dieses an der Probe anliegt und so die Voraussetzung für eine evaneszente Probenbeleuchtung geschaffen sind. Auf diese Weise wird wirkungsvoll vermieden, dass die Probe bereits lange vor der eigentlichen Untersuchung, beispielsweise durch Einklemmen zwischen Deckgläsern druckbelastet wird, wodurch gerade die zu untersuchenden Randbereiche der Probe nachhaltig geschädigt werden können, was insbesondere bei lebenden Proben von enormen Nachteil ist.

Das Umlenkmittel kann insbesondere einen Block aus transparentem Material, insbesondere ein Prisma, aufweisen. Hierbei kann beispielsweise vorgesehen sein, dass das aus dem Beleuchtungsobjektiv austretende Beleuchtungslichtbündel durch eine Hypotenusenfläche des Prismas in das Prisma eingekoppelt und an einer verspiegelten Kathetenfläche des Prismas in Richtung auf die an der Hypotenusenfläche anliegende Probe derart reflektiert wird, dass das Beleuchtungslichtbündel an der Hypotenusenfläche als Grenzfläche zur Probe totalreflektiert wird. Das von der Probe ausgehende Fluoreszenzlicht verläuft durch das Prisma zu dem Detektionsobjektiv, das das Detektionslicht kollimiert.

Zwischen dem optisch transparenten Medium, das, wie erwähnt, beispielsweise aus einem Block aus transparentem Material gebildet sein kann, und dem Detektionsobjektiv befindet sich vorzugsweise ein Mittel zum Anpassen der Brechungsindizes, wie beispielsweise ein Immersionsöl.

Eine solche Anordnung erlaubt es insbesondere, das Detektionsobjektiv relativ zu der Probe und relativ zu dem anliegenden Block aus transparentem Material bewegen zu können, wozu eine entsprechende Verstelleinrichtung zum Einstellen des Abstandes des Blocks aus transparentem Material relativ zu dem Detektionsobjektiv vorhanden sein kann. Eine solche Verstellmöglichkeit, beispielsweise mit einem Gewindetrieb, hat den Vorteil, dass bei der evaneszenten Beleuchtung auftretende Effekte, wie beispielsweise der Goos-Hähnchen-Effekt, kompensiert werden können.

Bei einer anderen vorteilhaften Ausführung ist das optisch transparente Medium, das gleichzeitig als Umlenkmittel fungiert, insbesondere unmittelbar an eine Frontlinse des Detektionsobjektivs angekoppelt. Die Ankopplung kann beispielsweise durch die Verwendung eines optischen Kits zwischen der Frontlinse des Detektionsobjektivs und dem entsprechend gegengeformten Block aus transparentem Material realisiert sein. Beispielsweise kann die Frontlinse als Halbkugellinse ausgebildet sein, an die ein entsprechend gegengeformter mit einer halbkugelförmigen, konkaven Ankoppelfläche ausgestatteter Block aus transparentem Material, beispielsweise mit einem optischen Kit, angekoppelt ist. Alternativ kann auch vorgesehen sein, dass das optisch transparente Medium, das gleichzeitig als Umlenkmittel fungiert, eine Frontlinse des Detektionsobjektivs beinhaltet und/oder dass das Umlenkmittel als Frontlinse des Detektionsobjektivs fungiert. Diese Lösungen haben den ganz besonderen Vorteil, dass Verluste an Detektionslicht durch ungewollte Reflektionen auf dem Lichtweg des Detektionslichts über das optisch transparente Medium und die Frontlinse des Detektionsobjektivs vermieden oder zumindest minimiert sind.

Wie bereits erwähnt, kann vorteilhaft vorgesehen sein, dass das Umlenkmittel einen Block aus transparentem Material aufweist, wobei wenigstens eine Außenfläche des Blocks, insbesondere die Außenfläche des Blocks, die dazu ausgebildet und angeordnet ist, an einer Probe anzuliegen, als Einkoppelfenster für das Beleuchtungslichtbündel fungiert.

Wie ebenfalls bereits erwähnt, kann vorgesehen sein, dass eine, vorzugsweise andere, Außenfläche des Blocks als Spiegel ausgebildet ist oder einen Spiegel aufweist, um das Beleuchtungslichtbündel umzulenken. Wie bereits erwähnt, kann insbesondere für eine Untersuchung der selben Probe auf der Basis einer anderen Untersuchungsmethode ein weiteres Umlenkmittel zum Umlenken des Beleuchtungslichtbündels, insbesondere eines Beleuchtungslichtbündels in Form eines Lichtstreifens oder Quasi-Lichtstreifens, vorhanden, insbesondere an dem Detektionsobjektiv angeordnet, sein. Insbesondere können das Umlenkmittel und/oder das weitere Umlenkmittel beweglich an dem Detektionsobjektiv befestigt sein, beispielsweise um den Auftreffort und/oder den Einfallswinkel und/oder die Einfallsrichtung des Beleuchtungslichtbündels ändern zu können und/oder um geometrische Korrekturen, beispielsweise zur Korrektur des Goos-Hähnchen-Effekts, vornehmen zu können. Insbesondere zu diesen Zwecken kann, wie bereits erwähnt, die Vorrichtung zur Ausführung des erfindungsgemäßen Verfahrens eine hinsichtlich des Ablenkwinkels einstellbare Strahlablenkeinrichtung aufweisen.

Insbesondere kann es sich bei der Strahlablenkeinrichtung auch um die Strahlablenkeinrichtung eines Rastermikroskops, insbesondere eines konfokalen Rastermikroskops handeln.

Eine Vorrichtung, die geeignet ist, das erfindungsgemäße Verfahren auszuführen, kann vorteilhaft auf der Basis eines Rastermikroskops, insbesondere eines konfokalen Rastermikroskops, aufgebaut sein. Hierbei bietet sich insbesondere die Verwendung eines inversen Mikroskopstatives an. Von besonderem Vorteil ist insoweit die Verwendung eines (möglicherweise in einem Labor ohnehin vorhandenen) Rastermikroskops zur Ausführung des erfindungsgemäßen Verfahrens.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind. Dabei zeigen:
Fig. 1 eine Detailansicht eines ersten Ausführungsbeispiels einer Vorrichtung zur Ausführung des erfindungsgemäßen Verfahrens mit einem einen Spiegel aufweisenden Umlenkmittel,
Fig. 2 eine Detailansicht eines zweiten Ausführungsbeispiels einer Vorrichtung zur Ausführung eines erfindungsgemäßen Verfahrens, bei der das Umlenkmittel als Block aus einem transparenten Material gebildet ist,
Fig. 3 eine Detailansicht eines dritten Ausführungsbeispiels einer erfindungsgemäßen Vorrichtung zur Ausführung des erfindungsgemäßen Verfahrens, bei der das Umlenkmittel zusätzlich die Funktion einer Frontlinse des Detektionsobjektivs übernimmt,
Fig. 4 eine Detailansicht eines vierten Ausführungsbeispiels, bei dem sowohl eine evaneszente Probenbeleuchtung, als auch eine direkte Probenbeleuchtung ermöglicht wird. Gezeigt wird die Stellung für eine evaneszente Probenbeleuchtung,
Fig. 5 die Detailansicht des vierten Ausführungsbeispiels, in der Einstellung für eine direkte Probenbeleuchtung zur SPIM-Untersuchung,
Fig. 6a und 6b
   eine schematische Darstellung zur Auftrefffläche des Beleuchtungslichtbündels,
Fig. 7a und 7b
   eine schematische Darstellung zur Veränderung des Auftreffortes des Beleuchtungslichtbündels,

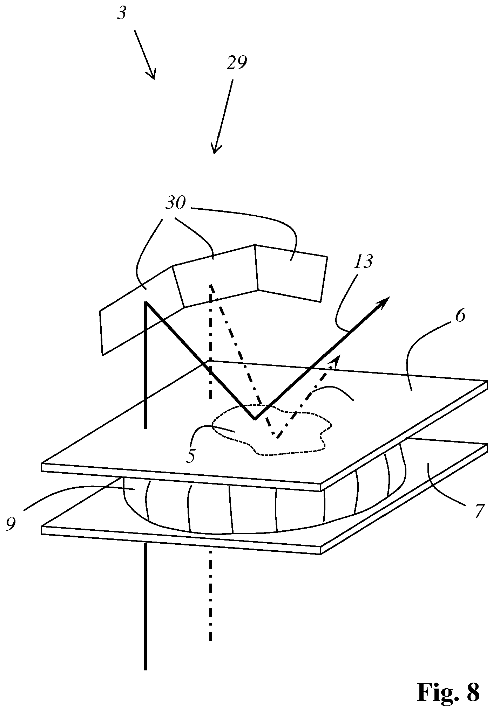

Fig. 8 eine Detailansicht eines Ausführungsbeispiels mit einem Umlenkmittel, das einen Facettenspiegel aufweist,

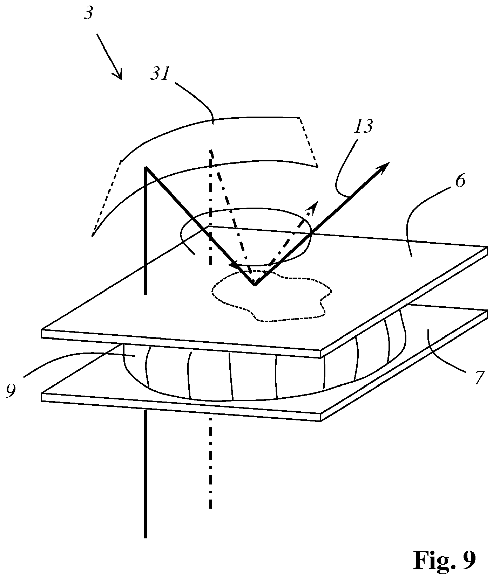

Fig. 9 eine Detailansicht eines Ausführungsbeispiels mit einem Umlenkmittel, das einen kegelstupfförmigen Spiegel aufweist, und

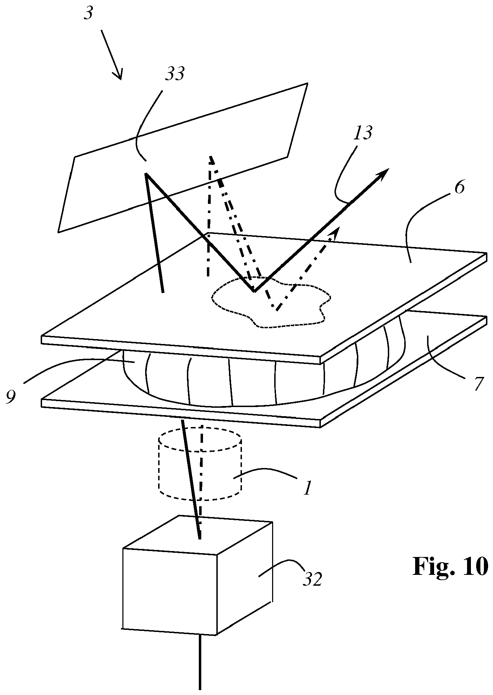

Fig. 10 eine Detailansicht eines Ausführungsbeispiels mit einer Strahlablenkeinrichtung zum Verändern des Auftreffortes und/oder des Einfallswinkels und/oder der Einfallsrichtung.

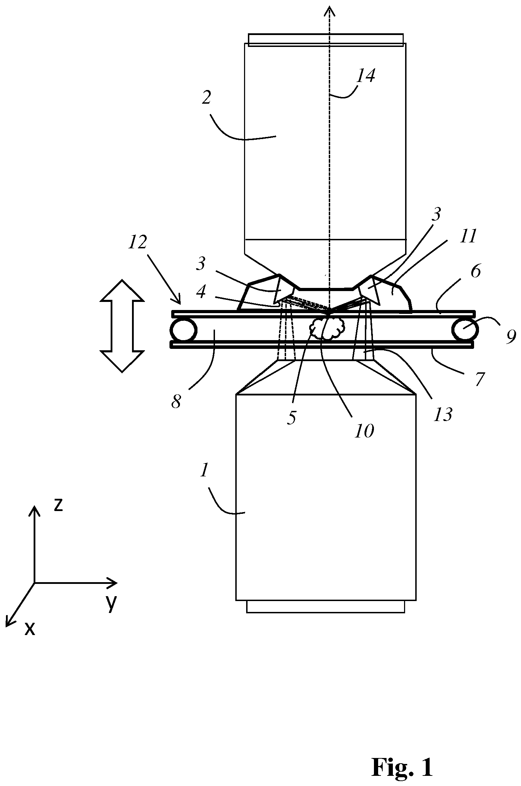

Figur 1 zeigt eine Detailansicht eines ersten Ausführungsbeispiels einer Vorrichtung, anhand der eine mögliche Ausführung des erfindungsgemäßen Verfahrens nachfolgend erläutert wird.

Die Vorrichtung weist ein Beleuchtungsobjektiv 1 und ein Detektionsobjektiv 2, das als Ölobjektiv ausgebildet ist, auf. Das Beleuchtungsobjektiv 1 und das Detektionsobjektiv 2 sind hinsichtlich ihrer optischen Achsen koaxial zueinander und einander entgegengesetzt angeordnet. An dem Detektionsobjektiv 2 ist ein Umlenkmittel 3 befestigt, das eine kegelabschnittförmige Spiegelfläche 4 aufweist.

Die zu untersuchende Probe 5 ist zwischen einem ersten Deckglas 6 und einem zweiten Deckglas 7 in einem wässrigen Nährmedium angeordnet. Die Deckgläser 6, 7 sind mittels einer umlaufenden Dichtung 9 gegeneinander abgedichtet, so dass das wässrige Nährmedium 8 nicht entweichen kann.

Zwischen dem Deckglas 6, das dem Detektionsobjektiv 2 zugewandt ist, und dem Detektionsobjektiv 2 befindet sich Immersionsöl 11, in das auch das Umlenkmittel 3 eingetaucht ist.

Das Deckglas 6, das dem Detektionsobjektiv 2 zugewandt ist, dient als optisch transparentes Medium 12, das einen höheren Brechungsindex aufweist, als die Probe 5. Ein Beleuchtungslichtbündel 13 wird von dem Beleuchtungsobjektiv 1 fokussiert und durchläuft nach dem Austreten aus der Frontlinse des Beleuchtungsobjektivs 1 die Deckgläser 6, 7, ohne mit der Probe 5 in Wechselwirkung zu treten und gelangt anschließend zu dem Umlenkmittel 3. Von diesem wird das Beleuchtungslichtbündel 13 in Richtung auf die zu untersuchende Probe 5 derart umgelenkt, dass das Beleuchtungslichtbündel 13 auf die Grenzfläche 10 zwischen dem optisch transparenten Medium 12 und der Probe 5 trifft und dort zur evaneszenten Beleuchtung der Probe 5 totalreflektiert wird.

Das von der Probe 5 ausgehende Fluoreszenzlicht 14 durchläuft das Detektionsobjektiv 2 und gelangt anschließend zu einem nicht eingezeichneten Flächendetektor zur Erfassung eines zweidimensionalen Bildes, wie beispielsweise einem CCD-Detektor. Mit Hilfe einer (nicht eingezeichneten) Strahlablenkeinrichtung kann das Beleuchtungslichtbündel 13 auf unterschiedliche Positionen der kegelstumpfförmigen Spiegelfläche 4 gelenkt werden, um das Beleuchtungslichtbündel 13 aus unterschiedlichen Einfallsrichtungen auf die Grenzfläche 10 zwischen dem optisch transparenten Medium 12 und der Probe 5 zu lenken. Dies ist in der Figur nur schematisch durch einen gestrichelt eingezeichneten, geänderten Strahlverlauf des Beleuchtungslichtbündels 13 angedeutet.

Es ist insbesondere für eine gute Auflösung wichtig, dass der Fokus des Beleuchtungslichtbündels 13, insbesondere unter Berücksichtigung geometrischer Korrekturen, wie beispielsweise zur Kompensation des Goos-Hähnchen-Effekts oder zur Kompensation einer Abweichung einer Dicke des optisch transparenten Mediums 12, insbesondere des Deckglases 6, von einer Solldicke, genau auf der Grenzfläche 10 zwischen dem optisch transparenten Medium 12 und der Probe 5 liegt. Um dies genau einstellen zu können, können die Deckgläser 6, 7 zusammen mit der Probe 5 relativ zu dem Beleuchtungsobjektiv 1 in Z-Richtung justiert werden. Hierzu kann beispielsweise ein in Z-Richtung einstellbarer Verschiebetisch vorhanden sein.

Darüber hinaus ist es auch möglich, die Deckgläser 6, 7 zusammen mit der dazwischen eingebrachten Probe 5 in X-Richtung und/oder Y-Richtung zu verschieben, um den Auftreffort des Beleuchtungslichtbündels 13 auf die Grenzfläche 10 einstellen zu können. Alternativ oder zusätzlich kann ein Verändern des Auftreffortes und/oder des Einfallswinkels und/oder Einfallsrichtung auch mit Hilfe der hinsichtlich des Ablenkwinkels einstellbaren Strahlablenkeinrichtung erfolgen.

Insbesondere um zu gewährleisten, dass die numerische Apertur des Detektionsobjektivs 2 zum Sammeln des Detektionslichts 14 auch ausgenutzt wird, kann das Detektionsobjektiv 2 ebenfalls in Z-Richtung und/oder in X-Y-Richtung relativ zur Probe justiert werden.

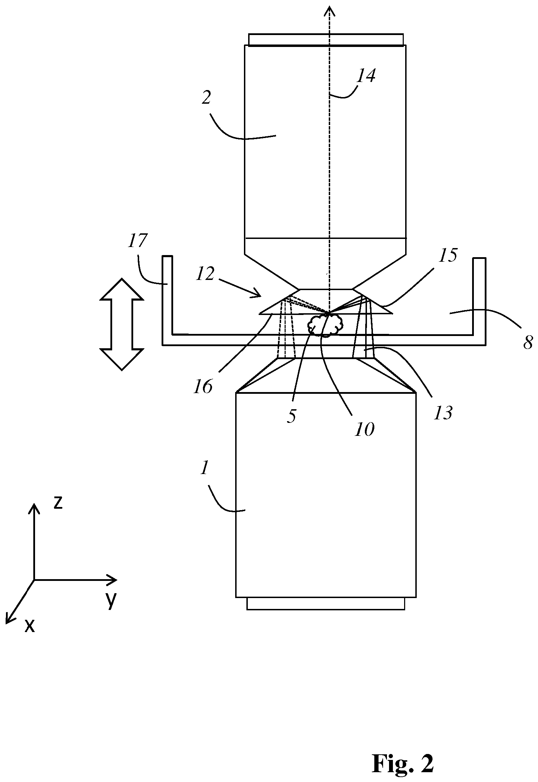

Figur 2 zeigt eine Detailansicht eines zweiten Ausführungsbeispiels, bei dem das optisch transparente Medium 12 als Prisma ausgebildet ist, das sowohl eine verspiegelte Fläche 15 zum Umlenken des von dem Beleuchtungsobjektiv 1 kommenden Beleuchtungslichtbündel 13 aufweist, als auch eine Außenfläche 16, die dazu ausgebildet und angeordnet ist, mit einer Probe 5 in Kontakt zu treten, so dass sich zwischen der Außenfläche 16 und der Probe 5 eine Grenzfläche 10 zur totalinternen Reflektion des Beleuchtungslichtbündels 13 bildet.

Die Probe 5 ist in einem mit einem wässrigen Nährmedium 8 gefüllten, zum Detektionsobjektiv 2 hin offenen Behältnis 17 angeordnet. Eine solche Ausführung hat den ganz besonderen Vorteil, dass die Probe 5 erst unmittelbar vor der eigentlichen Untersuchung mit dem optisch transparenten Medium 12 in Kontakt tritt und erst dann druckbelastet wird. Eine Schädigung der Probe 5 durch andauernde Druckbelastung vor der eigentlichen Untersuchung ist auf diese Weise vermieden oder zumindest sehr verringert.

Wie bei dem in Figur 1 dargestellten Ausführungsbeispiel verläuft das Detektionslicht 14 durch das Detektionsobjektiv 2 zu einem nicht dargestellten Flächendetektor zur Erfassung eines zweidimensionalen Bildes, wie beispielsweise einem CCD-Detektor.

Auch bei der in Figur 2 dargestellten Ausführung ist es möglich, beispielsweise mit Hilfe einer hinsichtlich des Ablenkwinkels einstellbaren Strahlablenkeinrichtung, den Auftreffort und/oder den Einfallswinkel und/oder die Einfallsrichtung des Beleuchtungslichtbündels 13 auf die Grenzfläche 10 zwischen dem optisch transparenten Medium 12 und der Probe 5 präzise und für die jeweilige Untersuchung flexibel angepasst einzustellen.

Bei diesem Ausführungsbeispiel ist das optisch transparente Medium 12, beispielsweise mit einem optischen Kit oder mit einem Immersionsöl, unmittelbar an die Frontlinse des Detektionsobjektivs 2 angekoppelt. Zur Untersuchung der Probe 5 wird das optisch transparente Medium 12 in das Wasser 8 eingetaucht und an die Probe 5 angelegt.

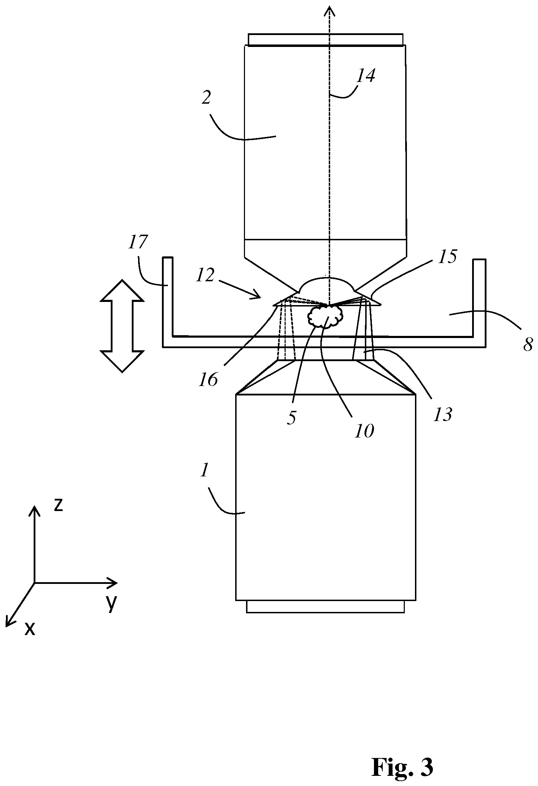

Figur 3 zeigt eine Detailansicht eines dritten Ausführungsbeispiels, das sich von dem in Figur 2 dargestellten Ausführungsbeispiel dadurch unterscheidet, dass das optisch transparente Medium 12 derart ausgebildet ist, dass es zusätzlich die Funktion der Frontlinse des Detektionsobjektivs 2 übernehmen kann. Insbesondere kann das optisch transparente Medium 12 eine Frontlinse und einen als Umlenkmittel fungierenden und eine Außenfläche zur Anlage an die Probe 5 aufweisenden Block beinhalten, die beide einstückig und zusammen hergestellt sind. Eine solche Ausführung ist besonders robust und wenig störungsanfällig.

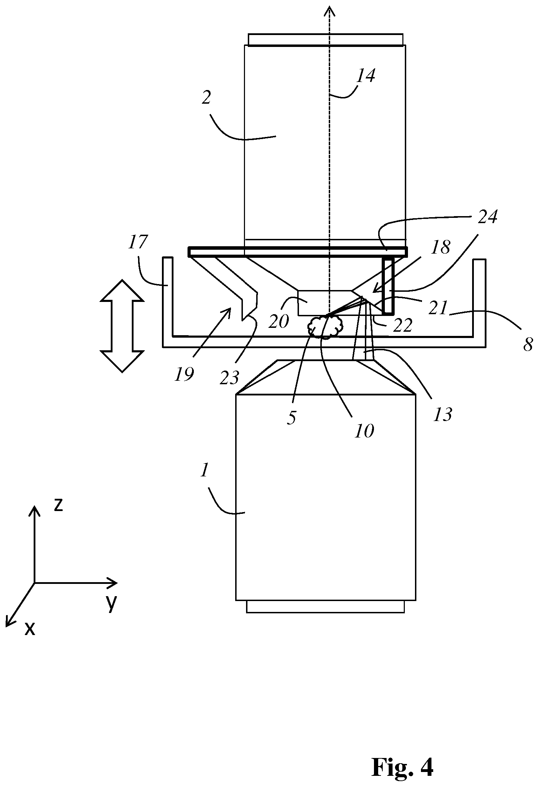

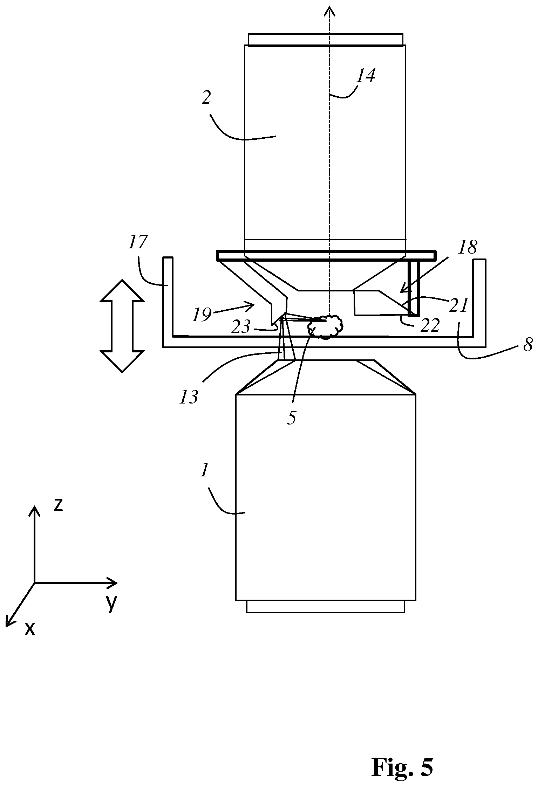

Die Figuren 4 und 5 zeigen jeweils eine Detailansicht eines vierten Ausführungsbeispiels einer Vorrichtung zum Ausführen eines erfindungsgemäßen Verfahrens. Die Vorrichtung weist ein erstes Umlenkmittel 18 und ein weiteres Umlenkmittel 19 auf. Sowohl das erste Umlenkmittel 18, als auch das weitere Umlenkmittel 19 sind an dem Detektionsobjektiv 2 befestigt. Das erste Umlenkmittel 18 beinhaltet ein optisch transparentes Medium 20, das eine verspiegelte Fläche 21 zum Umlenken eines Beleuchtungslichtbündels 13 aufweist. Außerdem weist das optisch transparente Medium 20 eine Außenfläche 22 auf, die dazu ausgebildet und angeordnet ist, mit einer Probe 5 zur Ausbildung einer Grenzfläche 10 für eine totalinterne Reflektion in Kontakt zu treten.

Figur 4 zeigt eine der beiden möglichen Einstellungen der Vorrichtung, nämlich die Einstellung zur Durchführung einer Untersuchung bei evaneszenter Probenbeleuchtung. Auch bei dieser Einstellung kann, wie weiter oben ausführlich beschrieben ist, eine Veränderung des Auftreffortes und/oder des Einfallswinkels und/oder der Einfallsrichtung der Beleuchtungslichtbündels 13 auf die Grenzfläche 10 erfolgen.

Die Vorrichtung ist zusätzlich dazu ausgebildet, eine Untersuchung an derselben Probe 5 mittels eines anderen Untersuchungsverfahrens, wie insbesondere SPIM durchzuführen. Hierzu wird das Beleuchtungslichtbündel 13, insbesondere in Form eines Lichtstreifens oder eines Quasi-Lichtstreifens, auf das weitere Umlenkmittel 19 gelenkt. Das weitere Umlenkmittel 19 weist eine zweite Spiegelfläche 23 auf.

Das weitere Umlenkmittel 19 lenkt das Beleuchtungslichtbündel 13 derart um, dass es sich nach der Umlenkung in einer zur optischen Achse des Detektionsobjektivs 2 senkrechten Ebene ausbreitet. Auf diese Weise wird eine Schicht der Probe 5 durchleuchtet und das von der Probe ausgehende Detektionslicht 14, das durch das Detektionsobjektiv 2 verläuft, vorzugsweise ortsaufgelöst, detektiert. Zum ortsaufgelösten Detektieren des von der Probe 5 ausgehenden Detektionslichts 14 kann beispielsweise ein Flächendetektor zur Erfassung eines zweidimensionalen Bildes, insbesondere ein CCD-Detektor oder SCMOS-Detektor, dienen. Der Detektor ist der besseren Übersicht halber in die Figuren nicht eingezeichnet.

Zum Einstellen einer korrekten Fokuslage und/oder zum Kompensieren von besonderen geometrischen Effekten, wie sie insbesondere bei einer evaneszenten Probenbeleuchtung auftreten können, sind das erste Umlenkmittel 18 und das weitere Umlenkmittel 19 beweglich und hinsichtlich ihrer Relativposition zu dem Detektionsobjektiv 2 einstellbar an dem Detektionsobjektiv 2 befestigt. Hierzu dient eine einstellbare Befestigungseinrichtung 24.

Auch bei diesem Ausführungsbeispiel ist es von Vorteil, wenn die einzelnen Komponenten hinsichtlich ihrer räumlichen Position relativ zu einander justiert werden können, beispielsweise um die Fokuslage korrekt einzustellen und/oder den Auftreffort und/oder den Einfallswinkel und/oder die Einfallsrichtung einstellen zu können.

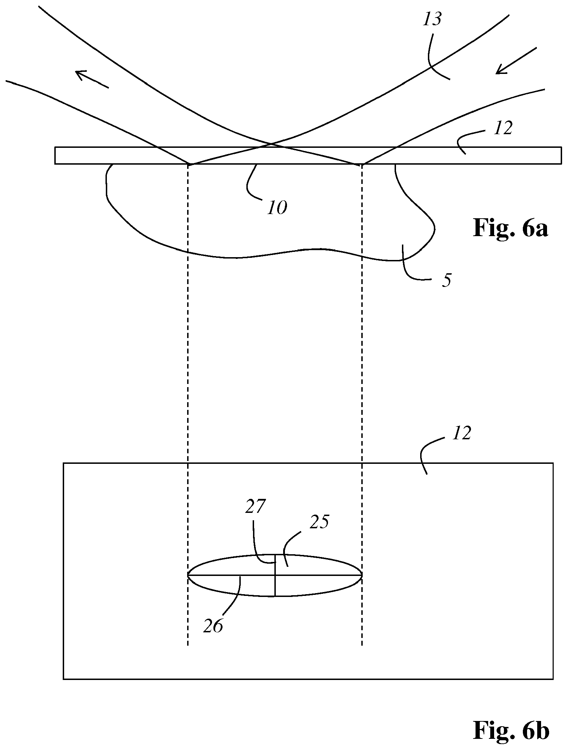

Die Figuren 6a und 6b zeigen eine schematische Darstellung zur Auftrefffläche 25 des Beleuchtungslichtbündels 13 auf die Grenzfläche 10 zwischen dem optisch transparenten Medium 12 und der Probe 5 für eine evaneszente Probenbeleuchtung.

Um einen möglichst großen Beleuchtungsfleck 25 zu erhalten, ist der Fokus des Beleuchtungslichtbündels 13 in Beleuchtungslichtausbreitungsrichtung möglichst lang und weist einen großen Fokusdurchmesser auf. Bei einem im Querschnitt senkrecht zur Ausbreitungsrichtung kreisrunden Beleuchtungslichtbündel ist die Auftrefffläche 25 auf der Grenzfläche 10 zwischen dem optisch transparenten Medium 12 und der Probe 5 naturgemäß elliptisch. Insoweit sollte die Fokuslänge, insbesondere durch Verwendung eines Beleuchtungsobjektivs 1 mit niedriger numerischer Apertur, vorzugsweise größer als das Doppelte der großen Halbachse 26 der Ellipse der Auftrefffläche 25 sein. Der Fokusdurchmesser entspricht in etwa dem Doppelten der kleinen Halbachse 27 der elliptischen Auftrefffläche 25. In dieser Richtung kann eine Vergrößerung der Auftrefffläche 25 beispielsweise durch Verwendung eines Beleuchtungslichtbündels 13 in Form eines Lichtstreifens oder eines Quasi-Lichtstreifens anstelle eines im Querschnitt kreisrunden Beleuchtungslichtbündels 13 erreicht werden.

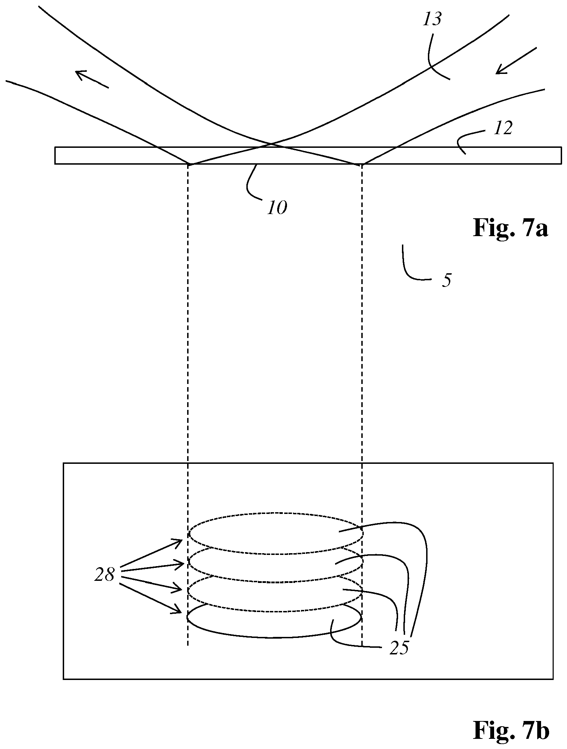

Die Figuren 7a und 7b zeigen eine schematische Darstellung zur Veränderung des Auftreffortes 28 des Beleuchtungslichtbündels 13 auf die Grenzfläche 10 zwischen dem optisch transparenten Medium 12 und der Probe 5.

Durch Bewegen der Probe 5 relativ zu dem Beleuchtungslichtbündel 13, beispielsweise mit einem einstellbaren Probentisch, und/oder durch Bewegen des Beleuchtungslichtbündel 13 relativ zur Probe 5, beispielsweise mit einer hinsichtlich des Ablenkwinkels einstellbaren Strahlablenkeinrichtung, und/oder durch Verschieben des Umlenkmittels 3 kann der Auftreffort 28 sukzessive verändert werden, also die Auftrefffläche 25 relativ zur Probe verschoben werden. Dies beispielsweise, um mehrere zweidimensionale Abbildungen von unterschiedlichen Probenbereichen zu gewinnen, die anschließend zu einer Gesamtabbildung zusammengesetzt werden können. Wird beispielsweise die Probe 5 bezogen auf Figur 7a senkrecht zur Zeichenebene relativ zum Beleuchtungslichtbündel 13 verschoben, können die Auftrefforte 28 wie in Figur 7b schematisch dargestellt aneinander gereiht und für jeden Auftreffort eine zweidimensionale Abbildung erzeugt werden.

Figur 8 zeigt eine Detailansicht eines Ausführungsbeispiels mit einem Umlenkmittel 3, das einen Facettenspiegel 29 aufweist. Der Facettenspiegel 29 weist mehrere unterschiedliche Facetten mit unterschiedlicher räumlicher Position und Ausrichtung auf.

Die zu untersuchende Probe 5 ist zwischen einem ersten Deckglas 6 und einem zweiten Deckglas 7 in einem wässrigen Nährmedium 8 angeordnet. Die Deckgläser 6, 7 sind mittels einer umlaufenden Dichtung 9 gegeneinander abgedichtet, so dass das wässrige Nährmedium 8 nicht entweichen kann.

Bei diesem Ausführungsbeispiel kann beispielsweise mit einer (in dieser Figur nicht dargestellten) Strahlablenkeinrichtung das Beleuchtungslichtbündel 13 auf unterschiedliche Facetten 30 gelenkt werden, um das Beleuchtungslichtbündel 13 an unterschiedlichen Auftrefforten 28 und/oder unter unterschiedlichen Einfallswinkeln und/oder mit unterschiedlichen Einfallsrichtungen des Beleuchtungslichtbündels 13 auf die Grenzfläche 10 zwischen der Probe 5 und dem optisch transparenten Medium 12, nämlich dem Deckglas 6, treffen zu lassen. Alternativ kann statt einer Veränderung der räumlichen Position und/oder Ausrichtung des Beleuchtungslichtbündels 13 auch der Facettenspiegel 29, beispielsweise mittels einer (in dieser Figur nicht eingezeichneten) Positioniereinheit relativ zu dem Beleuchtungslichtbündel 13 bewegt werden.

Fig. 9 zeigt eine Detailansicht eines Ausführungsbeispiels mit einem Umlenkmittel 3, das einen kegelstumpfförmigen Spiegel 31, von dem der besseren Übersicht halber nur ein Ausschnitt dargestellt ist, aufweist.

Die zu untersuchende Probe 5 ist zwischen einem ersten Deckglas 6 und einem zweiten Deckglas 7 in einem wässrigen Nährmedium 8 angeordnet. Die Deckgläser 6, 7 sind mittels einer umlaufenden Dichtung 9 gegeneinander abgedichtet, so dass das wässrige Nährmedium 8 nicht entweichen kann.

Der kegelstupfförmigen Spiegel 31 ermöglicht es beispielsweise, das Beleuchtungslichtbündel 13, insbesondere kontinuierlich und eine Kegeloberfläche beschreibend, um eine durch den Auftreffort 28 verlaufende Achse rotieren zu können.

Fig. 10 zeigt eine Detailansicht eines Ausführungsbeispiels mit einer hinsichtlich des Ablenkwinkels einstellbaren Strahlablenkeinrichtung 32, die beispielsweise einen oder mehrere Galvanometerspiegel beinhalten kann, zum Verändern des Auftreffortes 28 und/oder des Einfallswinkels und/oder der Einfallsrichtung des Beleuchtungslichtbündels 13 auf die Grenzfläche zwischen der Probe 5 und dem optisch transparenten Medium 12, nämlich dem Deckglas 6.

Bei diesem Ausführungsbeispiel ist das Umlenkmittel 3 als ebener Spiegel 33 ausgebildet. Durch Verändern des Auftreffortes der Beleuchtungslichtbündels 13 auf den ebenen Spiegel 32 kann der Auftreffort 28 und/oder der Einfallswinkel und/oder die Einfallsrichtung des Beleuchtungslichtbündels 13 auf die Grenzfläche zwischen der Probe 5 und dem optisch transparenten Medium 12 verändert werden.

Das Beleuchtungsobjektiv 1 und der Verlauf des Beleuchtungslichtbündels 13 ist in dieser Figur lediglich schematisch und nicht vollständig der Wirklichkeit entsprechend dargestellt, um das Prinzip der Veränderung der Beleuchtungsbedingungen zu illustrieren.

### Bezugszeichenliste:

- 1: Beleuchtungsobjektiv
- 2: Detektionsobjektiv
- 3: Umlenkmittel
- 4: Kegelstumpfförmige Spiegelfläche
- 5: Probe
- 6: Erstes Deckglas
- 7: Zweites Deckglas
- 8: wässriges Nährmedium
- 9: Dichtung
- 10: Grenzfläche
- 11: Immersionsöl
- 12: Transparentes optisches Medium
- 13: Beleuchtungslichtbündel
- 14: Detektionslicht
- 15: Verspiegelte Fläche
- 16: Außenfläche
- 17: Behältnis
- 18: Erstes Umlenkmittel
- 19: Weiteres Umlenkmittel
- 20: Optisch transparentes Medium
- 21: Verspiegelte Fläche
- 22: Außenfläche
- 23: Zweite Spiegelfläche
- 24: Befestigungseinrichtung
- 25: Auftrefffläche
- 26: große Halbachse
- 27: kleine Halbachse
- 28: Auftreffort
- 29: Facettenspiegel
- 30: Facetten
- 31: kegelstupfförmiger Spiegel
- 32: einstellbare Strahlablenkeinrichtung
- 33: ebener Spiegel

## Patentansprüche

1. Verfahren zum mikroskopischen Untersuchen einer Probe (5), **gekennzeichnet durch** folgende Schritte:
a. In-Kontakt-bringen der Probe (5) mit einem optisch transparenten Medium (12), das einen höheren Brechungsindex aufweist als die Probe (5),
b. Erzeugen eines Beleuchtungslichtbündels (13),
c. Lenken des Beleuchtungslichtbündels (13) durch ein Beleuchtungsobjektiv (1), das das Beleuchtungslichtbündel (13) fokussiert,
d. Umlenken des Beleuchtungslichtbündels (13), das das Beleuchtungsobjektiv (1) durchlaufen hat, in Richtung auf die zu untersuchende Probe (5) mit einem an einem Detektionsobjektiv (2) angeordneten Umlenkmittel, derart dass das Beleuchtungslichtbündel (13) auf eine Grenzfläche (10) zwischen dem optisch transparenten Medium (12) und der Probe (5) trifft und dort zur evaneszenten Beleuchtung der Probe (5) totalreflektiert wird,
e. Detektieren des von der Probe (5) ausgehenden und durch das Detektionsobjektiv (2) verlaufenden Fluoreszenzlichtes, **dadurch gekennzeichnet, dass** das Detektionsobjektiv (2) und das Beleuchtungsobjektiv (1) einander entgegengesetzt und einander gegenüberliegend ausgerichtet sind.

2. Verfahren nach Anspruch 1, **dadurch gekennzeichnet, dass**
a. die Grenzfläche (10) zwischen der Probe (5) und dem optisch transparenten Medium (12) unter einem von Null Grad verschiedenen Winkel zur optischen Achse des Beleuchtungsobjektivs (1) und/oder des Detektionsobjektivs (2) ausgerichtet wird, oder dass
b. die Grenzfläche (10) zwischen der Probe (5) und dem optisch transparenten Medium (12) senkrecht zur optischen Achse des Beleuchtungsobjektivs (1) und/oder des Detektionsobjektivs (2) ausgerichtet wird.

3. Verfahren nach Anspruch 1 oder 2, **dadurch gekennzeichnet, dass**
a. das Beleuchtungslichtbündel (13) nach dem Umlenken in einer Ebene verläuft, die einen von Null Grad verschiedenen Winkel zur optischen Achse des Beleuchtungsobjektivs (1) aufweist, und/oder dass
b. das Beleuchtungslichtbündel (13) derart abgelenkt wird, dass es unter einem Einfallswinkel im Bereich von 55 bis 70 Grad auf die Grenzfläche (10) zwischen der Probe (5) und dem optisch transparenten Medium (12) trifft, und/oder dass
c. das Beleuchtungslichtbündel (13) derart abgelenkt wird, dass es unter einem Einfallswinkel im Bereich von 60 bis 64 Grad auf die Grenzfläche (10) zwischen der Probe (5) und dem optisch transparenten Medium (12) trifft.

4. Verfahren nach einem der Ansprüche 1 bis 3, **dadurch gekennzeichnet, dass**
a. der Auftreffort (28) und/oder der Einfallswinkel und/oder die Einfallsrichtung des Beleuchtungslichtbündels (13) auf die Grenzfläche (10) zwischen der Probe (5) und dem optisch transparenten Medium (12) verändert wird, und/oder dass
b. der Auftreffort (28) des Beleuchtungslichtbündels (13) auf die Grenzfläche (10) zwischen der Probe (5) und dem optisch transparenten Medium (12) kontinuierlich entlang einer Scanbahn verändert wird, und/oder dass
c. der Auftreffort (28) und/oder der Einfallswinkel und/oder die Einfallsrichtung des Beleuchtungslichtbündels (13) auf die Grenzfläche (10) zwischen der Probe (5) und dem optisch transparenten Medium (12) mittels einer auf das Beleuchtungslichtbündel (13) wirkenden, hinsichtlich des Ablenkwinkels einstellbaren Strahlablenkeinrichtung verändert wird, und/oder dass
d. der Auftreffort (28) und/oder der Einfallswinkel und/oder die Einfallsrichtung des Beleuchtungslichtbündels (13) auf die Grenzfläche (10) zwischen der Probe (5) und dem optisch transparenten Medium (12) durch Bewegen der Probe (5) relativ zu dem Beleuchtungsobjektiv (1) verändert wird, und/oder dass
e. der Auftreffort (28) und/oder der Einfallswinkel und/oder die Einfallsrichtung des Beleuchtungslichtbündels (13) auf die Grenzfläche (10) zwischen der Probe (5) und dem optisch transparenten Medium (12) durch Bewegen des Umlenkmittels verändert wird und/oder dass
f. das Umlenkmittel (3) als Spiegel mit mehreren Facetten ausgebildet ist und der Auftreffort (28) und/oder der Einfallswinkel und/oder die Einfallsrichtung des Beleuchtungslichtbündels (13) auf die Grenzfläche (10) zwischen der Probe (5) und dem optisch transparenten Medium (12) dadurch verändert werden, dass nacheinander unterschiedliche Facetten beleuchtet werden.

5. Verfahren nach Anspruch 4, **dadurch gekennzeichnet, dass**
a. jedem Auftreffort (28) ein Probenbereich zugeordnet wird, und/oder dass
b. für jeden Auftreffort (28) unter Berücksichtigung des Einfallswinkels und/oder des Brechungsindex der Probe (5) und/oder des Brechungsindex des optisch transparenten Mediums (12) und/oder der Wellenlänge des Beleuchtungslichtbündels (13) und/oder dem Durchmesser des Auftreffortes (28) ein Probenbereich ermittelt wird.

6. Verfahren nach Anspruch 4 oder 5, **dadurch gekennzeichnet, dass** jedem Auftreffort (28) und/oder jedem zugeordneten Probenbereich jeweils eine Abbildung zugeordnet wird, die durch Detektion des während der Beleuchtung des jeweiligen Auftreffortes (28) von der Probe (5) ausgehenden Detektionslichts gewonnen wurde.

7. Verfahren nach einem der Ansprüche 1 bis 6, **dadurch gekennzeichnet, dass** jeweils derselbe Auftreffort (28) zeitlich nacheinander aus unterschiedlichen Richtungen beleuchtet wird.

8. Verfahren nach einem der Ansprüche 1 bis 7, **dadurch gekennzeichnet, dass** das Beleuchtungslichtbündel (13) im Querschnitt kreisrund ist oder dass das Beleuchtungslichtbündel (13) die Form eines Lichtstreifens oder Quasi-Lichtstreifens aufweist.

9. Verfahren nach einem der Ansprüche 1 bis 8, **dadurch gekennzeichnet, dass** die optische Achse des Beleuchtungsobjektivs (1) und die optische Achse des Detektionsobjektivs (2) zueinander parallel oder koaxial ausgerichtet sind.

10. Verfahren nach einem der Ansprüche 1 bis 9, **dadurch gekennzeichnet, dass**
a. dieselbe Probe (5) mit derselben Vorrichtung einer weiteren Untersuchung unterzogen wird, bei der ihre Beleuchtung mit dem Beleuchtungslichtbündel (13) direkt und ohne Totalreflexion an der Grenzfläche (10) erfolgt, und/oder dass
b. dieselbe Probe (5) mit derselben Vorrichtung einer weiteren Untersuchung unterzogen wird, bei der ihre Beleuchtung für eine SPIM-Untersuchung (Single Plane Illumination Microscopy) mit dem Beleuchtungslichtbündel (13) direkt und ohne Totalreflexion an der Grenzfläche (10) erfolgt, und/oder dass
c. dieselbe Probe (5) mit derselben Vorrichtung einer weiteren Untersuchung unterzogen wird, bei der ihre Beleuchtung mit dem zu einem Lichtstreifen oder Quasi-Lichtstreifen geformten Beleuchtungslichtbündel (13) direkt und ohne Totalreflexion an der Grenzfläche (10) erfolgt.

11. Verfahren nach Anspruch 10, **dadurch gekennzeichnet, dass** das Beleuchtungslichtbündel (13), nachdem es das Beleuchtungsobjektiv (1) durchlaufen hat, für die weitere Untersuchung mittels eines weiteren, an dem Detektionsobjektiv (2) angeordneten Umlenkmittels zur Probe (5) umgelenkt wird.

12. Verfahren nach einem der Ansprüche 1 bis 11, **dadurch gekennzeichnet, dass** das Beleuchtungslichtbündel (13) derart in das Beleuchtungsobjektiv (1) eingekoppelt wird, dass es außermittig durch das Beleuchtungsobjektiv (1) verläuft.

13. Vorrichtung zur Ausführung eines Verfahrens nach einem der Ansprüche 1 bis 12, mit einem Beleuchtungsobjektiv (1) und einem Detektionsobjektiv (2), an dem ein Umlenkmittel (3) zum Umlenken eines Beleuchtungslichtbündels (13) auf eine Grenzfläche (10) zwischen einem optisch transparenten Medium (12) und einer Probe (5) angeordnet ist, **dadurch gekennzeichnet, dass** das Detektionsobjektiv (2) und das Beleuchtungsobjektiv (1) einander entgegengesetzt und einander gegenüberliegend ausgerichtet sind.

14. Vorrichtung nach Anspruch 13, **dadurch gekennzeichnet, dass** das transparente optische Medium (12) das Umlenkmittel (3, 18) ist oder Teil des Umlenkmittels (3, 18) ist.

15. Vorrichtung nach einem der Ansprüche 13 oder 14, **dadurch gekennzeichnet, dass**
a. das Umlenkmittel (3, 18) einen Block aus transparentem Material, insbesondere ein Prisma, aufweist, und/oder dass
b. das Umlenkmittel (3, 18), insbesondere unmittelbar, an eine Frontlinse des Detektionsobjektivs (2), angekoppelt ist oder dass das Umlenkmittel eine Frontlinse des Detektionsobjektivs (2) beinhaltet, und/oder dass
c. das Umlenkmittel (3, 18) einen Block aus transparentem Material aufweist, wobei wenigstens eine Außenfläche des Blocks als Spiegel ausgebildet ist, und/oder dass
d. das Umlenkmittel (3, 18) einen Block aus transparentem Material aufweist, wobei eine Außenfläche als Einkoppelfenster für das Beleuchtungslichtbündel (13) ausgebildet und angeordnet ist.

16. Vorrichtung nach einem der Ansprüche 13 bis 15, **dadurch gekennzeichnet, dass**
a. ein weiteres Umlenkmittel (19) für eine weitere Untersuchung, bei der die Beleuchtung der Probe (5) mit dem Beleuchtungslichtbündel (13) direkt und ohne Totalreflexion an der Grenzfläche (10) erfolgt, vorhanden ist, und/oder dass
b. ein weiteres Umlenkmittel (19) für eine weitere Untersuchung, bei der die Beleuchtung der Probe (5) mit dem Beleuchtungslichtbündel (13) direkt und ohne Totalreflexion an der Grenzfläche (10) erfolgt, an dem Detektionsobjektiv (2) angeordnet ist.

17. Vorrichtung nach einem der Ansprüche 13 bis 16, **dadurch gekennzeichnet, dass**
a. das Umlenkmittel (3) oder das weitere Umlenkmittel als Spiegel oder als Facettenspiegel (29) ausgebildet ist oder dass
b. das Umlenkmittel (3) oder das weitere Umlenkmittel wenigstens einen Spiegel oder einen Facettenspiegel (29) aufweist, oder dass
c. das Umlenkmittel oder das weitere Umlenkmittel einen Spiegel mit einer kegelstumpfförmigen Spiegelfläche aufweist.

18. Vorrichtung nach einem der Ansprüche 13 bis 17, **dadurch gekennzeichnet, dass** das Umlenkmittel (3, 18) und/oder das weitere Umlenkmittel (19) beweglich an dem Detektionsobjektiv (2) befestigt sind.

19. Vorrichtung nach einem der Ansprüche 13 bis 18, **gekennzeichnet durch** eine hinsichtlich des Ablenkwinkels einstellbare Strahlablenkeinrichtung (32) zum Verändern des Auftreffortes (28) und/oder des Einfallswinkels und/oder der Einfallsrichtung des Beleuchtungslichtbündels (13) auf die Grenzfläche (10).

## Claims

1. Method for microscopic examination of a sample (5), **characterized by** the following steps:
a. Bringing the sample (5) into contact with an optically transparent medium (12) having a higher refractive index than the sample (5),
b. Generating an illumination light beam (13),
c. Directing the illumination light beam (13) through an illumination lens (1) which focuses the illumination light beam (13),
d. Deflecting the illumination light beam (13), which has passed through the illumination lens (1), in the direction of the sample (5) to be examined by means of a deflecting means arranged on a detection lens (2) in such a way that the illumination light beam (13) impacts on an interface (10) between the optically transparent medium (12) and the sample (5) and is totally reflected there for evanescent illumination of the sample (5),
e. Detecting the fluorescent light emanating from the sample (5) and passing through the detection lens (2), **characterised in that** the detection lens (2) and the illumination lens (1) are oriented opposite to each other and facing each other.

2. Method according to claim 1, **characterized in that**
a. the interface (10) between the sample (5) and the optically transparent medium (12) is aligned at a non-zero degree angle to the optical axis of the illumination lens (1) and/or the detection lens (2), or **in that**
b. the interface (10) between the sample (5) and the optically transparent medium (12) is aligned perpendicular to the optical axis of the illumination lens (1) and/or the detection lens (2).

3. Method according to claim 1 or 2, **characterized in that**
a. the illumination light beam (13), after deflection, runs in a plane which has a non-zero degree angle to the optical axis of the illumination lens (1), and/or **in that**
b. the illumination light beam (13) is deflected in such a way that it impacts on the interface (10) between the sample (5) and the optically transparent medium (12) at an angle of incidence in the range of 55 to 70 degrees, and/or **in that**
c. the illumination light beam (13) is deflected in such a way that it impacts on the interface (10) between the sample (5) and the optically transparent medium (12) at an angle of incidence in the range of 60 to 64 degrees.

4. Method according to any one of claims 1 to 3, **characterized in that**
a. the point of incidence (28) and/or the angle of incidence and/or the direction of incidence of the illuminating light beam (13) on the interface (10) between the sample (5) and the optically transparent medium (12) is changed, and/or **in that**
b. the point of incidence (28) of the illumination light beam (13) on the interface (10) between the sample (5) and the optically transparent medium (12) is continuously changed along a scanning path, and/or **in that**
c. the point of incidence (28) and/or the angle of incidence and/or the direction of incidence of the illumination light beam (13) on the interface (10) between the sample (5) and the optically transparent medium (12) is changed by means of a beam deflection device acting on the illumination light beam (13) and being adjustable with respect to the deflection angle, and/or **in that**
d. the point of incidence (28) and/or the angle of incidence and/or the direction of incidence of the illumination light beam (13) on the interface (10) between the sample (5) and the optically transparent medium (12) is changed by moving the sample (5) relative to the illumination lens (1), and/or **in that**
e. the point of incidence (28) and/or the angle of incidence and/or the direction of incidence of the illuminating light beam (13) on the interface (10) between the sample (5) and the optically transparent medium (12) is changed by moving the deflecting means and/or **in that**
f. the deflecting means (3) is designed as a mirror with several facets and the point of incidence (28) and/or the angle of incidence and/or the direction of incidence of the illumination light beam (13) on the interface (10) between the sample (5) and the optically transparent medium (12) are changed by successively illuminating different facets.

5. Method according to claim 4, **characterized in that**
a. a sample area is assigned to each point of incidence (28), and/or **in that**
b. a sample area is determined for each point of incidence (28) taking into account the angle of incidence and/or the refractive index of the sample (5) and/or the refractive index of the optically transparent medium (12) and/or the wavelength of the illuminating light beam (13) and/or the diameter of the point of incidence (28).

6. Method according to claim 4 or 5, **characterized in that** an image is assigned to each point of incidence (28) and/or to each assigned sample area, said image being obtained by detecting the detection light emanating from the sample (5) during the illumination of the respective point of incidence (28).

7. Method according to any one of claims 1 to 6, **characterized in that** the same point of incidence (28) is illuminated successively in time from different directions respectively.

8. Method according to any one of claims 1 to 7, **characterized in that** the illumination light beam (13) is circular in cross-section or **in that** the illumination light beam (13) has the shape of a light strip or quasi-light strip.

9. Method according to any one of claims 1 to 8, **characterized in that** the optical axis of the illumination lens (1) and the optical axis of the detection lens (2) are aligned parallel or coaxial to each other.

10. Method according to any one of claims 1 to 9, **characterized in that**
a. the same sample (5) is subjected to a further examination using the same apparatus, in which its illumination is performed directly and without total reflection at the interface (10) using the illumination light beam (13), and/or **in that**
b. the same sample (5) is subjected to a further examination using the same apparatus, in which its illumination for a SPIM examination (Single Plane Illumination Microscopy) is performed directly and without total reflection at the interface (10) using the illumination light beam (13), and/or **in that**
c. the same sample (5) is subjected to a further examination using the same apparatus, in which its illumination is performed directly and without total reflection at the interface (10) using the illumination light beam (13) formed as a light strip or quasi-light strip.

11. Method according to claim 10, **characterized in that** the illumination light beam (13), after it has passed through the illumination lens (1), is deflected towards the sample (5) for further examination by means of a further deflecting means arranged on the detection lens (2).

12. Method according to any one of claims 1 to 11, **characterized in that** the illumination light beam (13) is coupled into the illumination lens (1) in such a way that it passes off-centre through the illumination lens (1).

13. Apparatus for performing a method according to any one of claims 1 to 12, comprising an illumination lens (1) and a detection lens (2) on which a deflecting means (3) is arranged for deflecting an illumination light beam (13) onto an interface (10) between an optically transparent medium (12) and a sample (5), **characterized in that** the detection lens (2) and the illumination lens (1) are aligned opposite to each other and facing each other.

14. Apparatus according to claim 13, **characterized in that** the transparent optical medium (12) is the deflecting means (3, 18) or is part of the deflecting means (3, 18).

15. Apparatus according to any one of claims 13 or 14, **characterized in that**
a. the deflecting means (3, 18) comprises a block of transparent material, in particular a prism, and/or **in that**
b. the deflecting means (3, 18) is coupled, in particular directly, to a front lens of the detection lens (2), or that the deflecting means includes a front lens of the detection lens (2), and/or **in that**
c. the deflecting means (3, 18) comprises a block of transparent material, wherein at least one outer surface of the block is formed as a mirror, and/or **in that**
d. the deflecting means (3, 18) comprises a block of transparent material, wherein an outer surface is formed and arranged as a coupling window for the illumination light beam (13).

16. Apparatus according to any one of claims 13 to 15, **characterized in that**
a. a further deflecting means (19) is provided for a further examination in which the illumination of the sample (5) is performed directly and without total reflection at the interface (10) using the illumination light beam (13), and/or **in that**
b. a further deflecting means (19) is arranged on the detection lens (2) for a further examination in which the illumination of the sample (5) is performed directly and without total reflection at the interface (10) using the illumination light beam (13).

17. Apparatus according to any one of claims 13 to 16, **characterized in that**
a. the deflecting means (3) or the further deflecting means is formed as a mirror or as a faceted mirror (29), or **in that**
b. the deflecting means (3) or the further deflecting means comprises at least one mirror or one faceted mirror (29), or **in that**
c. the deflecting means or the further deflecting means comprises a mirror with a frustoconical mirror surface.

18. Apparatus according to any one of claims 13 to 17, **characterized in that** the deflecting means (3, 18) and/or the further deflecting means (19) are movably mounted on the detection lens (2).

19. Apparatus according to any one of claims 13 to 18, **characterized by** a beam deflection device (32) being adjustable with respect to the deflection angle for changing the point of incidence (28) and/or the angle of incidence and/or the direction of incidence of the illumination light beam (13) onto the interface (10).

## Revendications

1. Procédé d'examen microscopique d'un échantillon (5), **caractérisé par** les étapes suivantes :
a. Mise en contact de l'échantillon (5) avec un médium optiquement transparent (12) ayant un indice de réfraction plus élevé que l'échantillon (5),
b. Générer un faisceau lumineux d'éclairage (13),
c. Diriger le faisceau lumineux d'éclairage (13) à travers une lentille d'éclairage (1) qui focalise le faisceau lumineux d'éclairage (13),
d. Défléchir le faisceau lumineux d'éclairage (13), qui a traversé la lentille d'éclairage (1), en direction de l'échantillon (5) à examiner à l'aide d'un moyen de déflexion disposé sur une lentille de détection (2) de telle sorte que le faisceau lumineux d'éclairage (13) frappe une interface (10) entre le médium optiquement transparent (12) et l'échantillon (5) et y soit totalement réfléchi pour l'éclairage évanescent de l'échantillon (5),
e. détecter la lumière fluorescente émanant de l'échantillon (5) et passant à travers la lentille de détection (2), **caractérisé en ce que** la lentille de détection (2) et la lentille d'éclairage (1) sont alignées de manière opposée et se font face.

2. Procédé selon la revendication 1, **caractérisé en ce que**
a. l'interface (10) entre l'échantillon (5) et le médium optiquement transparent (12) est alignée selon un angle non nul par rapport à l'axe optique de la lentille d'éclairage (1) et/ou de la lentille de détection (2), ou **en ce que**
b. l'interface (10) entre l'échantillon (5) et le médium optiquement transparent (12) est alignée perpendiculairement à l'axe optique de la lentille d'éclairage (1) et/ou de la lentille de détection (2).

3. Procédé selon la revendication 1 ou 2, **caractérisé en ce que**
a. le faisceau lumineux d'éclairage (13), après déflection, s'étend dans un plan qui fait un angle non nul avec l'axe optique de la lentille d'éclairage (1), et/ou **en ce que**
b. le faisceau lumineux d'éclairage (13) est défléchi de telle manière qu'il frappe l'interface (10) entre l'échantillon (5) et le médium optiquement transparent (12) sous un angle d'incidence compris entre 55 et 70 degrés, et/ou **en ce que**
c. le faisceau lumineux d'éclairage (13) est défléchi de telle manière qu'il frappe l'interface (10) entre l'échantillon (5) et le médium optiquement transparent (12) sous un angle d'incidence compris entre 60 et 64 degrés.

4. Procédé selon l'une des revendications 1 à 3, **caractérisé en ce que**
a. le point d'incidence (28) et/ou l'angle d'incidence et/ou la direction d'incidence du faisceau lumineux d'éclairage (13) sur l'interface (10) entre l'échantillon (5) et le médium optiquement transparent (12) est modifié, et/ou **en ce que**
b. le point d'incidence (28) du faisceau lumineux d'éclairage (13) sur l'interface (10) entre l'échantillon (5) et le médium optiquement transparent (12) est modifié en permanence le long d'un trajet de balayage, et/ou **en ce que**
c. le point d'incidence (28) et/ou l'angle d'incidence et/ou la direction d'incidence du faisceau lumineux d'éclairage (13) sur l'interface (10) entre l'échantillon (5) et le médium optiquement transparent (12) est modifié au moyen d'un dispositif de déflexion du faisceau agissant sur le faisceau lumineux d'éclairage (13) et réglable par rapport à l'angle de déflexion, et/ou **en ce que**
d. le point d'incidence (28) et/ou l'angle d'incidence et/ou la direction d'incidence du faisceau lumineux d'éclairage (13) sur l'interface (10) entre l'échantillon (5) et le médium optiquement transparent (12) est modifié en déplaçant l'échantillon (5) par rapport à la lentille d'éclairage (1), et/ou **en ce que**
e. le point d'incidence (28) et/ou l'angle d'incidence et/ou la direction d'incidence du faisceau lumineux d'éclairage (13) sur l'interface (10) entre l'échantillon (5) et le médium optiquement transparent (12) est modifié par le déplacement du moyen de déflexion et/ou **en ce que**
f. le moyen de déflexion (3) est conçu comme un miroir à plusieurs facettes et le point d'incidence (28) et/ou l'angle d'incidence et/ou la direction d'incidence du faisceau lumineux d'éclairage (13) sur l'interface (10) entre l'échantillon (5) et le médium optiquement transparent (12) sont modifiés par l'éclairage successif de différentes facettes.

5. Procédé selon la revendication 4, **caractérisé en ce que**
a. une zone d'échantillonnage est attribuée à chaque point d'incidence (28), et/ou en ce
b. une zone d'échantillonnage est déterminée pour chaque point d'incidence (28) en tenant compte de l'angle d'incidence et/ou de l'indice de réfraction de l'échantillon (5) et/ou de l'indice de réfraction du médium optiquement transparent (12) et/ou de la longueur d'onde du faisceau lumineux d'éclairage (13) et/ou du diamètre du point d'incidence (28).

6. Procédé selon la revendication 4 ou 5, **caractérisé en ce que** chaque point d'incidence (28) et/ou chaque zone d'échantillon associée est respectivement associé(e) à une image obtenue en détectant la lumière de détection émanant de l'échantillon (5) pendant l'illumination du point d'incidence (28) respectif.

7. Procédé selon l'une quelconque des revendications 1 à 6, **caractérisé en ce que**, respectivement, le même point d'incidence (28) est illuminé successivement dans le temps à partir de différentes directions.

8. Procédé selon l'une quelconque des revendications 1 à 7, **caractérisé en ce que** le faisceau lumineux d'éclairage (13) est circulaire en section transversale ou **en ce que** le faisceau lumineux d'éclairage (13) a la forme d'une bande lumineuse ou d'une quasi-bande lumineuse.

9. Procédé selon l'une quelconque des revendications 1 à 8, **caractérisé en ce que** l'axe optique de la lentille d'éclairage (1) et l'axe optique de la lentille de détection (2) sont alignés parallèlement ou coaxialement l'un par rapport à l'autre.

10. Procédé selon l'une des revendications 1 à 9, **caractérisé en ce que**
a. le même échantillon (5) est soumis à un autre examen avec le même dispositif, dans lequel son illumination est effectuée avec le faisceau lumineux d'éclairage (13) directement et sans réflexion totale à l'interface (10), et/ou **en ce que**
b. le même échantillon (5) est soumis à un autre examen avec le même dispositif, dans lequel son illumination pour un examen SPIM (Single Plane Illumination Microscopy) est effectuée avec le faisceau lumineux d'éclairage (13) directement et sans réflexion totale à l'interface (10), et/ou **en ce que**
c. le même échantillon (5) est soumis à un autre examen avec le même dispositif, dans lequel son illumination est effectuée avec le faisceau lumineux d'illumination (13) formé en une bande lumineuse ou quasi-bande lumineuse, directement et sans réflexion totale à l'interface (10).

11. Procédé selon la revendication 10, **caractérisé en ce que** le faisceau lumineux d'éclairage (13), après avoir traversé la lentille d'éclairage (1), est défléchi vers l'échantillon (5) pour un autre examen au moyen d'un autre moyen de déflexion disposé sur la lentille de détection (2).

12. Procédé selon l'une quelconque des revendications 1 à 11, **caractérisé en ce que** le faisceau lumineux d'éclairage (13) est couplé dans la lentille d'éclairage (1) de telle sorte qu'il passe de manière excentrée à travers la lentille d'éclairage (1).

13. Dispositif pour la mise en oeuvre d'un procédé selon l'une quelconque des revendications 1 à 12, comprenant une lentille d'éclairage (1) et une lentille de détection (2) sur laquelle est disposé un moyen de déflexion (3) pour défléchir un faisceau de lumière d'éclairage (13) sur une interface (10) entre un médium optiquement transparent (12) et un échantillon (5), **caractérisé en ce que** la lentille de détection (2) et la lentille d'éclairage (1) sont alignées de manière opposée et se font face.

14. Dispositif selon la revendication 13, **caractérisé en ce que** le médium optique transparent (12) est le moyen de déflexion (3, 18) ou est une partie du moyen de déflexion (3, 18).

15. Dispositif selon l'une des revendications 13 ou 14, **caractérisé en ce que**
a. le moyen de déflexion (3, 18) comprend un bloc de matériau transparent, en particulier un prisme, et/ou **en ce que**
b. le moyen de déflexion (3, 18) est couplé, en particulier directement, à une lentille frontale de la lentille de détection (2), ou que le moyen de déflexion comprend une lentille frontale de la lentille de détection (2), et/ou que
c. le moyen de déflexion (3, 18) comprend un bloc de matériau transparent, dans lequel au moins une surface extérieure du bloc est réalisée sous forme de miroir, et/ou **en ce que**
d. le moyen de déflexion (3, 18) comprend un bloc de matériau transparent, dans lequel une surface extérieure est réalisée et disposée comme une fenêtre de couplage pour le faisceau lumineux d'éclairage (13).

16. Dispositif selon l'une des revendications 13 à 15, **caractérisé en ce que**
a. un autre moyen de déflexion (19) est prévu pour un autre examen dans lequel l'illumination de l'échantillon (5) est effectuée avec le faisceau lumineux d'éclairage (13) directement et sans réflexion totale à l'interface (10), et/ou **en ce que**
b. un autre moyen de déflexion (19) est disposé sur la lentille de détection (2) pour un autre examen dans lequel l'illumination de l'échantillon (5) est effectuée avec le faisceau lumineux d'éclairage (13) directement et sans réflexion totale à l'interface (10).

17. Dispositif selon l'une quelconque des revendications 13 à 16, **caractérisé en ce que**
a. le moyen de déflexion (3) ou l'autre moyen de déflexion est réalisé sous la forme d'un miroir ou d'un miroir à facettes (29), ou **en ce que**
b. le moyen de déflexion (3) ou l'autre moyen de déflexion comprend au moins un miroir ou un miroir à facettes (29), ou **en ce que**
c. le moyen de déflexion ou l'autre moyen de déflexion comprend un miroir avec une surface de miroir tronconique.

18. Dispositif selon l'une des revendications 13 à 17, **caractérisé en ce que** le moyen de déflexion (3, 18) et/ou l'autre moyen de déflexion (19) sont fixés de manière mobile à la lentille de détection (2).

19. Dispositif selon l'une quelconque des revendications 13 à 18, **caractérisé par** un dispositif de déflexion de faisceau (32) réglable par rapport à l'angle de déflexion pour modifier le point d'incidence (28) et/ou l'angle d'incidence et/ou la direction d'incidence du faisceau lumineux d'éclairage (13) sur l'interface (10).
